# EUROPÄISCHE PATENTSCHRIFT

(11) **EP 0 816 211 B1**
(45) Veröffentlichungstag und Bekanntmachung des Hinweises auf die Patenterteilung: **19.12.2001**
(21) Anmeldenummer: 97109797.7
(22) Anmeldetag: 17.06.1997
(51) Int. Cl.: B62D 53/12

(54) **Sattelkupplung**
Fifth-wheel coupling
Sellette d'attelage

(30) Priorität: 18.06.1996 CH 152096; 19.09.1996 DE 29616253 U
(43) Veröffentlichungstag der Anmeldung: 07.01.1998
(73) Patentinhaber: ERICH JAEGER GmbH & Co. KG, D-61350 Bad Homburg v.d.H. 1 (DE)
(72) Erfinder: Nussbaumer, Horst, 63683 Ortenberg (DE); Rautenberg, Kurt, 61267 Neu-Anspach (DE); Wiese, Wolfgang, 61273 Wehrheim (DE); Roth-Schuler, Christian, 78224 Singen (DE)
(74) Vertreter: KEIL & SCHAAFHAUSEN

(56) Entgegenhaltungen:
- DE-A- 2 039 309
- US-A- 3 181 888

## Beschreibung

Die Erfindung bezieht sich auf eine Sattelkupplung für die Kupplung einer Sattelzugmaschine mit einem Sattelanhänger nach dem Oberbegriff des Anspruchs 1.

Bei einem Auf- und Absattelvorgang des Sattelanhängers müssen bei z.B. aus der DE-A-4 135 795 bekannten Sattelkupplungen die Verbindungen der elektrischen und pneumatischen Medienversorgung für beispielsweise Beleuchtung, Bremsen und Antiblockiersystem manuell vom Fahrer gekuppelt werden. Der Fahrer muß dazu die Fahrerkabine verlassen, um Spiralschläuche anzuschließen bzw. zu lösen. Dabei kommt es immer wieder zu Schäden an den Spiralschläuchen, die sich zumeist erst während der Fahrt durch den Ausfall von Komponenten bemerkbar machen. Der zeitaufwendige An- bzw. Abkopplungsvorgang ist für den Fahrer nicht nur unbequem, sondern auch nicht immer ungefährlich, da er oft noch unter Zeitdruck, zum Beispiel auch bei Eisesglätte, zum Anschluß der Versorgungsleitungen auf die Zugmaschine klettern muß.

Deswegen sind z.B. in der gattungsgemäßen DE-A-2 039 309 und den DE-A-2 039 310 und DE-A-2 039 311 Sattelkupplungen vorgeschlagen, welche ein selbsttätiges Kuppeln auch der Versorgungsleitungen gestatten sollen.

Aufgabe der Erfindung ist es, eine Sattelkupplung der eingangs genannten Art zu schaffen, welche ein selbsttätiges zeitsparendes und betriebssicheres Verbinden der Versorgungsleitungen zwischen Sattelzugmaschine und Sattelanhänger ermöglicht, wobei z.B. die elektrischen Kontaktstifte und Kontaktbuchsen der Steckverbindung sowie die Pneumatikanschlüsse zuverlässig ausgerichtet in- bzw. aneinander geführt werden.

Diese Aufgabe wird bei einer Sattelkupplung der eingangs genannten Art mit den Merkmalen des Anspruchs 1 gelöst.

Auf diese Weise werden die Versorgungsleitungen beim Ankoppeln eines Sattelanhängers an eine Sattelzugmaschine selbsttätig, sicher und beschädigungsfrei miteinander verbunden. Während an dem stationären Teil von oben die Versorgungseinleitungen angeschlossen sind, kann der ebenfalls an Versorgungsleitungen angeschlossene bewegliche Teil von unten in den Zugsattelzapfen ein- und an den stationären Teil zur Verbindung herangeführt werden. Der bewegliche Teil der Anschlußeinheit, zum Beispiel der Steckdosenteil, ist bei gelöster Kupplung in einem an der Kupplungsplatte festgelegten Gehäuseteil geschützt angeordnet und über eine Antriebseinheit in den Zugsattelzapfen einführbar. Ein besonderer Vorteil des drehbar gelagerten Zugsattelzapfens liegt darin, daß - im Gegensatz zu konventionellen Sattelkupplungen - zwischen der Kupplungsplatte und dem dieser aufliegenden Zugsattelzapfen keine Relativbewegung und damit auch kein Verschleiß mehr auftritt.

Zum Zweck einer weiteren Verbesserung der Positionierbarkeit der beiden Teile der Anschlußeinheit kann an dem Zugsattelzapfen ein Zentrierbolzen festgelegt sein, der bei dem Kupplungsvorgang an Führungselementen an der Kupplungsplatte gleitend geführt ist. Dadurch erfolgt beim Aufsatteln eine selbsttätige Ausrichtung des Zugsattelzapfens um die Längsachse der Sattelkupplung. Zum Schutz der Anschlußeinheit kann das Gehäuseteil eine z.B. durch Federkraft selbsttätig oder antreibbar schließende Abdeckung aufweisen, welche vorzugsweise bei dem Kopplungsvorgang von dem Zugsattelzapfen über ein Steuerteil verschiebbar ist.

Die Antriebseinheit kann beispielsweise einen elektrisch oder pneumatisch betätigbaren Zahnrad/Zahnstangen-Antrieb für die Hubbewegung des beweglichen Teiles der Anschlußeinheit aufweisen. Für die Hubbewegung sind aber auch andere Antriebsarten möglich, beispielsweise in der Art, daß die Antriebseinheit einen elektrisch oder pneumatisch betätigbaren Schrägoder Kurvenscheiben-Antrieb aufweist. In jedem Fall gewährleistet die Antriebseinheit, daß nach dem Aufsatteln ein selbsttätiges Anschließen der Versorgungsleitungen durch eine Steuerung der Relativbewegung zwischen stationärem Teil und beweglichem Teil der Anschlußeinheit von der Fahrerkabine aus möglich ist.

In weiterer Ausgestaltung dieses Erfindungsgedankens kann der bewegliche Teil der Anschlußeinheit innerhalb des Zahnrades angeordnet und in diesem über in Nuten an einer Innenwand des Antriebsrades eingreifende Mitnehmerstifte gleitend geführt sein.

Ein weiterer Erfindungsgedanke besteht darin, zur Sicherstellung einer spannungsfreien Steckverbindung den beweglichen Teil der Anschlußverbindung, beispielsweise den Gehäuseteil, an der Kupplungsplatte schwimmend zu lagern.

In Betriebstellung kann der bewegliche Teil der Anschlußeinheit, zum Beispiel der Steckdosenteil, über einen im Zugsattelzapfen geführten Sicherungsstift auf einfache Weise verriegelbar sein, so daß während der Fahrt mechanische Beanspruchungen von der Steckverbindung abgehalten werden.

Der stationäre Teil der Anschlußeinheit ist vorzugsweise mittels einer Distanzhülse in dem Zugsattelzapfen, zum Beispiel durch Anschlag an einer in dem Zugsattelzapfen umlaufenden Schulter, axial und radial festgelegt, um bei einfacher Montage beim Einführen des beweglichen Teils der Anschlußeinheit in den Zugsattelzapfen eine sichere Verbindung zu gewährleisten.

Der stationäre Teil der Anschlußeinheit kann dabei zudem von der Distanzhülse mittels ineinandergreifender Stege und Nuten in seiner radialen Position gesichert sein.

Ein weiteres bevorzugtes Erfindungsmerkmal besteht darin, daß die Versorgungsleitungen Pneumatikleitungen sind und beiden Teile der Anschlußeinheit in Betriebsstellung zueinander fluchtende Kanäle zur Bildung von Pneumatikleitungen aufweisen, an welche beidseits Pneumatikschläuche anschließbar sind.

Analog sind die Versorgungsleitungen vorzugsweise elektrische Kabel, wobei die beiden Teile der Anschlußeinheit in Betriebsstellung ineinandergreifende Kontaktstifte und Kontaktbuchsen aufweisen, an welchen die Kabel angeschlossen sind.

Weitere Ziele, Merkmale, Vorteile und Anwendungsmöglichkeiten der Erfindung ergeben sich aus der nachfolgenden Beschreibung von Ausführungsbeispielen anhand der Zeichnung. Dabei bilden alle beschriebenen und/oder bildlich dargestellten Merkmale für sich oder in beliebiger Kombination den Gegenstand der Erfindung, auch unabhängig von ihrer Zusammenfassung in einzelnen Ansprüchen oder deren Rückbeziehung.

Es zeigen:
- Fig. 1: eine teilweise geschnittene Seitenansicht eines in einem Aufnahmeteller gelagerten Zugsattelzapfens einer erfindungsgemäßen Sattelkupplung,
- Fig. 2: eine Draufsicht auf die Anordnung von Fig. 1,
- Fig. 3: einen Längsschnitt durch einen Zugsattelzapfen in eingefahrener Position des beweglichen Teils der Anschlußeinheit,
- Fig. 4: eine Abwicklung der Innenfläche des Zahnrades von Fig. 3,
- Fig. 5: einen Querschnitt durch einen an einer Traverse gelagerten Gehäuseteil mit Abdeckung,
- Fig. 6: eine Draufsicht auf die Abdeckung von Fig. 5,
- Fig. 7: die Ansicht der Antriebseinheit von Fig. 5 in Blickrichtung x von Fig. 6,
- Fig. 8: das Prinzip der Vorzentrierung des Zugsattelzapfens beim Ankoppeln, und
- Fig. 9: die Ansicht eines Steckerteils von deren Anschlußseite aus.

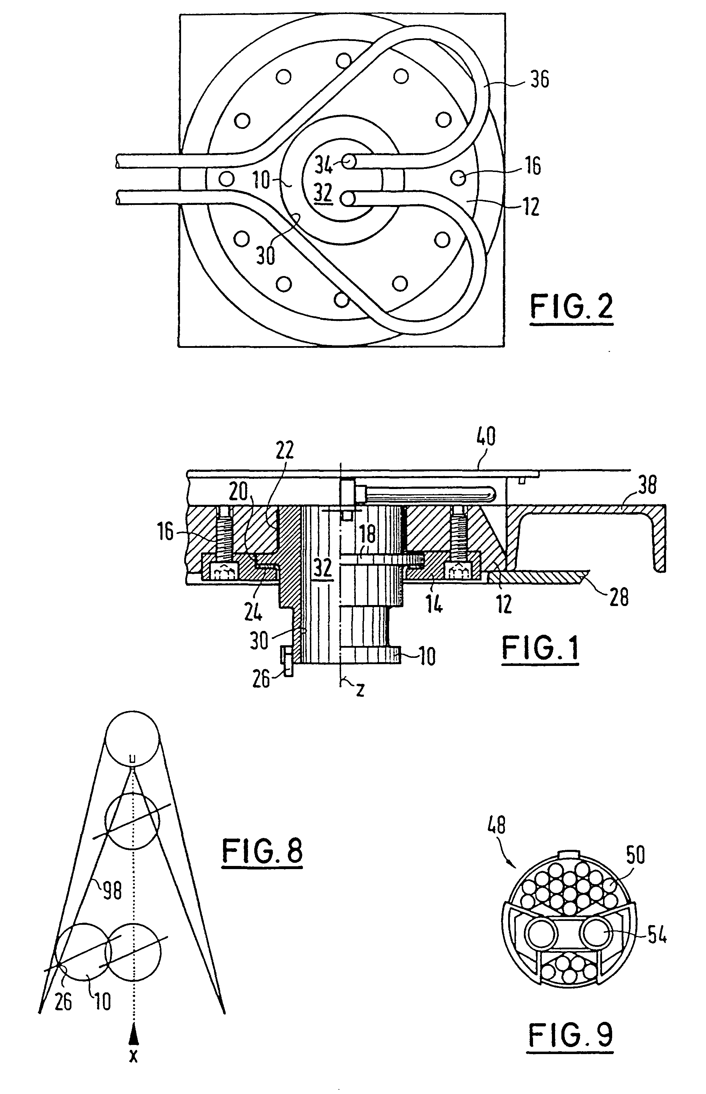

Ein Zugsattelzapfen 10 ist gemäß den Fig. 1 und 2 in einem Aufnahmeteller 12 eingesetzt und in diesem durch einen mittels Zylinderschrauben 16 festgelegten Deckel 14 gehalten. Entlang einer Umfangslinie des Zugsattelzapfens 10 ist eine Ringscheibe 18 angeformt, die in einer durch den Aufnahmeteller 12 und den Deckel 14 gebildeten Ringnut 20 aufgenommen ist.

Der Zugsattelzapfen 10 ist so um seine Achse z an dem Aufnahmeteller 12 drehbar gelagert. Zur Gewährleistung der freien Drehbarkeit unter Lasteinwirkung ist zwischen dem Zugsattelzapfen 10 und dem Aufnahmeteller 12 ein Gleitlager 22 angeordnet. Zur zusätzlichen Gleitlagerung der Ringscheibe 18 in der Ringnut 20 befinden sich beidseits der Ringscheibe 18 Gleitlager-Anlaufscheiben 24. Am freien Ende des Zugsattelzapfens 10 ragt stirnseitig in Achsenrichtung z ein in Umfangsnähe des Zugsattelzapfens 10 festgelegter Zentrierbolzen 26 ab.

Der Zugsattelzapfen 10 weist eine zylinderförmige Innenwand 30 auf, die einen sich in Achsenrichtung z erstreckenden rohrförmigen Hohlraum 32 begrenzt.

Der Aufnahmeteller 12 mit integriertem Zugsattelzapfen 10 ist an einer Aufliegerplatte 28 festgelegt, die ihrerseits an Querträgern 38 an der Unterseite eines aus Gründen der besseren Übersicht in der Zeichnung nicht wiedergegebenen Sattelanhängers montiert ist.

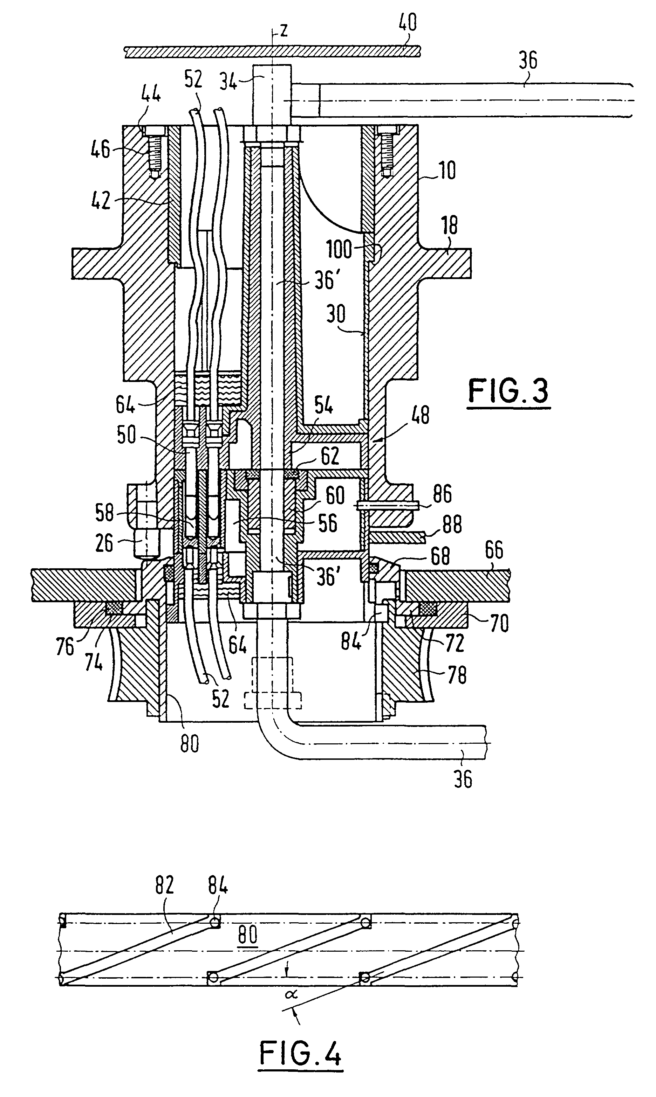

Gemäß Fig. 3 ist von oben in den rohrfömrigen Hohlraum 32 im Zugsattelzapfen 10 eine Distanzhülse 42 zur axialen und radialen Sicherung eines stationären Teils, nämlich eines Steckerteils 48, einer Anschlußeinheit 58, 56 eingesetzt und über einen oben angeformten Flansch 44 mittels Befestigungsschrauben 46 mit dem Zugsattelzapfen 10 fest verbunden. Dabei wird eine Gehäusewandung des Steckerteils 48 an eine in dem Zugsattezapfen 10 umlaufende Schulter 100 axial angedrückt. Die Distanzhülse 42 hat am unteren Rand Ausnehmungen, in welche entsprechend geformte Stege des Steckerteils 48 eingreifen und diesen in seiner radialen Position festlegen.

Von dem Steckerteil 48 ragen parallel zur Achsenrichtung z des Zugsattelzapfens 10 Kontaktstifte 50 ab. Die Kontaktstifte 50 sind an elektrische Kabel 52 angeschlossen, die durch den rohrförmigen Hohlraum 32 aus dem Zugsattelzapfen 10 herausgeführt sind. Ebenfalls im Inneren des Zugsattelzapfens 10 sind von dem Steckerteil 48 Pneumatikleitungen 36' gebildet, welcher in Pneumatikanschlüssen 54 enden. Die Pneumatikleitungen 36' sind beim Austritt aus dem Zugsattelzapfen 10 über Drehverschraubungen 34 mit Pneumatikschläuchen 36 verbunden.

Zum Schutz der aus dem Zugsattelzapfen 10 nach oben austretenden elektrischen Kabel 52 und Pneumatikschläuche 36 ist an den Querträgern 38 eine Abdeckplatte 40 festgelegt.

In der in Fig. 3 veranschaulichten Betriebsstellung liegt an dem stationären Steckerteil 48 ein in Achsenrichtung z des Zugsattelzapfens 10 verschiebbarer Teil der Anschlußeinheit 58, 56, in dem dargestellten Fall ein Steckdosenteil 56 mit den Kontaktstiften 50 entsprechenden Kontaktbuchsen 58 sowie den Pneumatikanschlüssen 54 entsprechenden Pneumatikanschlüssen 60 stirnseitig an. In Betriebsstellung sind somit die Kontaktstifte 50 in die entsprechenden Kontaktbuchsen 58 eingeführt und die beiden Pneumatikanschlüsse 54, 60 der nunmehr durchgehenden Pneumatikleitung 36' liegen aufgrund dazwischen angeordneter Dichtungsringe 62 dichtend aneinander an.

Die Anschlußbereiche der elektrischen Kabel 52 zu den Kontaktstifen 50 bzw. Kontaktbuchsen 58 sind mit Gießharz oder ähnlichem Material 64 abgedichtet.

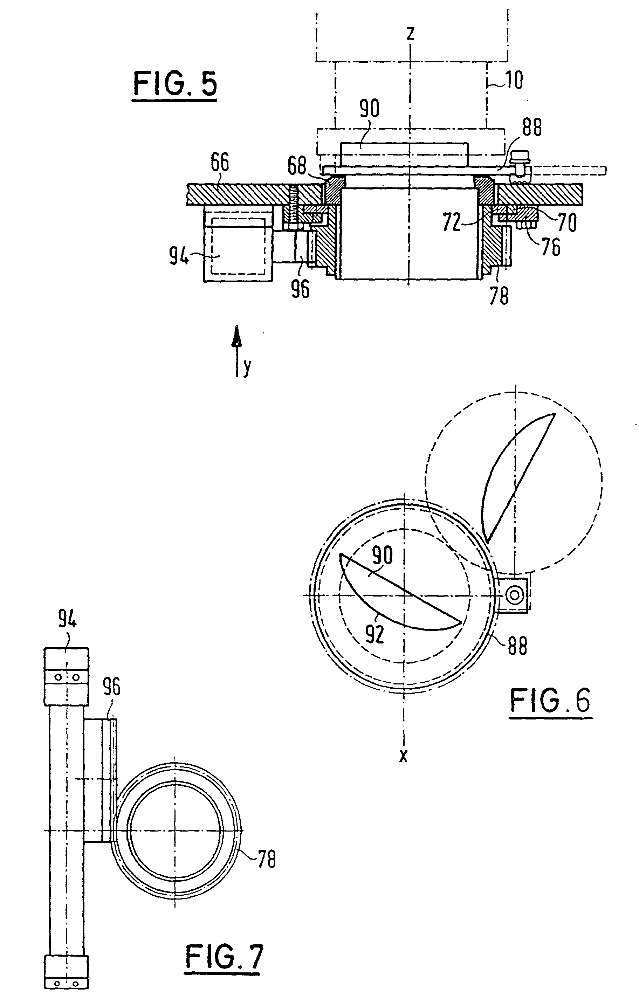

Wie insbesondere aus Fig. 5 ersichtlich, ist der Steckdosenteil 56 in einem Gehäuseteil 68 in Achsenrichtung z gleitend verschiebbar geführt. Der Gehäuseteil 68 ist über ein an eine Traverse 66 der Kupplungsplatte einer aus Gründen der besseren Übersicht in der Zeichnung nicht wiedergegebenen Sattelkupplung einer Sattelzugmaschine festgelegtes Befestigungselement 70 gesichert. Hierbei lagert eine an dem Gehäuseteil 68 angeformte Ringscheibe 72 schwimmend in einer zwischen dem Befestigungselement 70 und der Traverse 66 gebildeten Ringnut 74, in deren Nutgrund ein elastisches Element 76 eingelegt ist. Durch diese schwimmende Lagerung ist der Steckdosenteil 56 im Betriebszustand frei von mechanischen Spannungen.

Ein als Antriebsrad dienendes Zahnrad 78 ist um die Achsenrichtung z drehbar mit dem nicht drehbar angeordneten Gehäuseteil 68 verbunden. Das Zahnrad 78 weist eine zylinderförmige Innenwand 80 mit gemäß Fig. 4 in einem Winkel von beispielsweise 20° schräg verlaufenden Nuten 82 auf. In die Nuten 82 greifen am Umfang des Steckdosenteils 56 angeordnete Mitnehmerstifte 84 ein. Durch Drehbewegung des Zahnrades 78 werden die Mitnehmerstifte 84 aufgrund der Führung in den Nuten 82 in Achsenrichtung z bewegt. Dadurch erfolgt je nach Drehrichtung des Zahnrades 78 eine Bewegung des Steckdosenteils 56 in Achsenrichtung z in Betriebstellung des Steckdosenteils 56. Wenn sich dieser in stirnseitigem Anschlag mit dem Steckerteil 48 befindet, durchdringt ein in Zugsattelzapfen 10 geführter Sicherungsstift 86 eine entsprechende Bohrung in dem Steckdosenteil 56 und verriegelt diesen mit dem Zugsattelzapfen 10.

In abgekoppelter Lage befindet sich der Steckdosenteil 56 gemäß Fig. 5 innerhalb des Gehäuseteils 68 bzw. innerhalb des Zahnrades 78. In dieser Stellung ist der Gehäuseteil 68 von einer scheibenförmigen Abdeckung 88 abgedeckt. Auf der Abdeckung 88 ist ein Steuerteil 90 derart festgelegt, daß es von dem einfahrenden Zugsattelzapfen 10 mitgenommen wird, wodurch sich die Abdeckung 88 selbsttätig öffnet. Eine Anschlagkante 92 des Steuerteils 90 ist gemäß Fig. 6 derart gekrümmt, daß sich beim Einfahren des Zugsattelzapfens 10 eine Drehung um 90° ergibt. Beim Ausfahren des Zugsattelzapfens 10 erfolgt die Schließung der Abdeckung 88 selbsttätig über eine vorgespannte, in der Zeichnung nicht dargestellte Feder.

Die Drehbewegung des Zahnrades 78 erfolgt gemäß Fig. 7 über eine an einem Pneumatikzylinder 54 festgelegte Zahnstange 96.

Fig. 8 zeigt die Funktionsweise des an dem Zugsattelzapfen 10 festgelegten Zentrierbolzens 26. Der Zentrierbolzen 26 liegt beim Einfahren des Zugsattelzapfens 10 an ein schienenartiges Führungselement 98 an, wodurch selbsttätig eine Ausrichtung des Zugsattelzapfens 10 um die Sattelkupplungslängsachse x erfolgt.

Fig. 9 zeigt beispielhaft einen Steckerteil 48 mit 22 Kontaktstiften 50 sowie zwei Pneumatikanschlüssen 54.

### Bezugszeichenliste:

- 10: Zugsattelzapfen
- 12: Aufnahmeteller
- 14: Deckel
- 16: Zylinderschrauben
- 18: Ringscheibe
- 20: Ringnut
- 22: Gleitlager
- 24: Anlaufscheiben
- 26: Zentrierbolzen
- 28: Aufliegerplatte
- 30: Innenwand
- 32: Hohlraum
- 34: Drehverschraubung
- 36: Pneumatikschläuche
- 36': Pneumatikleitung
- 38: Querträger
- 40: Abdeckplatte
- 42: Distanzhülse
- 44: Flansch
- 46: Befestigungsschrauben
- 48: Steckerteil
- 50: Kontaktstifte
- 52: Kabel
- 54: Pneumatikanschlüsse
- 56: Steckdosenteil
- 58: Kontaktbuchsen
- 60: Pneumatikanschlüsse
- 62: Dichtungsringe
- 64: Gießharz oder dergleichen Material
- 66: Traverse
- 68: Gehäuseteil
- 70: Befestigungselement
- 72: Ringscheibe
- 74: Ringraum
- 76: elastisches Element
- 78: Zahnrad
- 80: Innenwand
- 82: Nuten
- 84: Mitnehmerstift
- 86: Sicherungsstift
- 88: Abdeckung
- 90: Steuerteil
- 92: Anschlagkante
- 94: Pneumatikzylinder
- 96: Zahnstange
- 98: Führungselementen
- 100: Schulter

- z: Achsenrichtung

## Patentansprüche

1. Sattelkupplung für die Kupplung einer Sattelzugmaschine mit einem Sattelanhänger, mit einer Kupplungsplatte, einem mit dieser in Eingriff bringbaren Zugsattelzapfen (10) sowie mit Anschlüssen zur Verbindung von Versorgungsleitungen (36, 52) zwischen der Sattelzugmaschine und dem Sattelanhänger, wobei die Versorgungsleitungen (36, 52) von der Sattelzugmaschine und dem Sattelanhänger beidseits in den Zugsattelzapfen (10) hineinführbar und über eine innerhalb des Zugsattelzapfens (10) angeordnete Anschlußeinheit (48, 56) miteinander verbindbar sind, wobei die Anschlußeinheit (48, 56) zweiteilig aus einem Steckerteil (48) und einem Steckdosenteil (56) ausgebildet ist, wobei einer dieser beiden Teile, zum Beispiel der Steckerteil (48), stationär in dem Zugsattelzapfen (10) angeordnet und der andere dieser beiden Teile, zum Beispiel der Steckdosenteil (56), in den Zugsattelzapfen (10) zur Verbindung mit dem einen dieser beiden Teile einführbar ist, wobei der bewegliche Teil der Anschlußeinheit (48, 56) in einem an der Kupplungsplatte festgelegten Gehäuseteil (68) aufgenommen und über eine Antriebseinheit (78, 96) in den Zugsattelzapfen (10) zur Verbindung mit dem stationären Teil der Anschlußeinheit (48, 56) einführbar und unter Lösen von dem stationären Teil der Anschlußeinheit (48, 56) aus dem Zugsattelzapfen (10) herausführbar und in den Gehäuseteil (68) versenkbar ist, **dadurch gekennzeichnet, daß** der Zugsattelzapfen (10) und damit der darin stationär aufgenommene Teil der Anschlußeinheit (48, 56) drehbar gelagert und bei dem Kupplungsvorgang relativ zu dem beweglichen Teil der Anschlußeinheit (48, 56) positionierbar ist.

2. Sattelkupplung nach Anspruch 1, **dadurch gekennzeichnet, daß** an dem Zugsattelzapfen (10) ein Zentrierbolzen (26) festgelegt ist, der bei dem Kupplungsvorgang an Führungselementen (98) an der Kupplungsplatte gleitend geführt ist.

3. Sattelkupplung nach Anspruch 1 bis 2, **dadurch gekennzeichnet, daß** das Gehäuseteil (68) eine, zum Beispiel durch Federkraft selbsttätig oder antreibbar, schließende Abdeckung (88) aufweist.

4. Sattelkupplung nach Anspruch 3, **dadurch gekennzeichnet, daß** die Abdeckung (88) bei dem Kupplungsvorgang von dem Zugsattelzapfen (10) über ein Steuerteil (90) verschiebbar ist.

5. Sattelkupplung nach einem der Ansprüche 1 bis 4, **dadurch gekennzeichnet, daß** die Antriebseinheit (78, 96) einen zum Beispiel elektrisch oder pneumatisch betätigbaren Zahnrad/Zahnstangen-Antrieb (78, 96) für die Hubbewegung des beweglichen Teils der Anschlußeinheit (48, 56) aufweist.

6. Sattelkupplung nach einem der Ansprüche 1 bis 5, **dadurch gekennzeichnet, daß** die Antriebseinheit (78, 96) einen zum Beispiel elektrisch oder pneumatisch betätigbaren Schräg- oder Kurvenscheibenantrieb für die Hubbewegung des beweglichen Teils der Anschlußeinheit (48, 56) aufweist.

7. Sattelkupplung nach Anspruch 5, **dadurch gekennzeichnet, daß** der bewegliche Teil der Anschlußeinheit (48, 56) in das Antriebsrad (78) hineinragt und in diesem über in Nuten (82) an einer Innenwand (80) des Antriebsrades (78) eingreifende Mitnehmerstifte (84) gleitend geführt ist.

8. Sattelkupplung nach einem der Ansprüche 1 bis 7, **dadurch gekennzeichnet, daß** der bewegliche Teil der Anschlußeinheit (48, 56), zum Beispiel aufgrund des ihn aufnehmenden Gehäuseteils (68), zur Sicherstellung einer spannungsfreien Steckverbindung an der Kupplungsplatte schwimmend gelagert ist.

9. Sattelkupplung nach einem der Anspruch 1 bis 8, **dadurch gekennzeichnet, daß** der bewegliche Teil der Anschlußeinheit (48, 56) in Betriebsstellung über einen im Zugsattelzapfen (10) geführten Sicherungsstift (86) verriegelbar ist.

10. Sattelkupplung nach einem der Ansprüche 1 bis 9, **dadurch gekennzeichnet, daß** der stationäre Teil der Anschlußeinheit (48, 56) mittels einer Distanzhülse (42) in dem Zugsattelzapfen (10), zum Beispiel durch Anschlag an einer in dem Zugsattelzapfen (10) umlaufenden Schulter (100), axial und radial festgelegt ist.

11. Sattelkupplung nach Anspruch 10, **dadurch gekennzeichnet, daß** der stationäre Teil der Anschlußeinheit (48, 56) von der Distanzhülse (42) mittels ineinandergreifender Stege und Nuten in seiner radialen Position gesichert ist.

12. Sattelkupplung nach einem der Ansprüche 1 bis 4, **dadurch gekennzeichnet, daß** die Versorgungsleitungen Pneumatikleitungen (36) sind und die beiden Teile der Anschlußeinheit (48, 56) in Betriebsstellung zueinander fluchtende Kanäle zur Bildung von Pneumatikleitungen (36') aufweisen, an welche beidseits Pneumatikschläuche (36) anschließbar sind.

13. Sattelkupplung nach einem der Ansprüche 1 bis 12, **dadurch gekennzeichnet, daß** die Versorgungsleitungen elektrische Kabel (57) sind und die beiden Teile der Anschlußeinheit (48, 56) in Betriebsstellung ineinandergreifende Kontaktstifte (50) und Kontaktbuchsen (58) aufweisen, an welchen die Kabel (52) angeschlossen sind.

## Claims

1. Saddle coupling for coupling a traction engine to a semi trailer including a coupling plate, a draw saddle pin (10) engageable thereto as well as connections for connecting the supply leads (36, 52) between the traction engine and the semi trailer, the supply leads (36, 52) being insertible from the traction engine and the semi at both sides into the draw saddle pin (10) and being connectable to each other via a connecting unit (48, 56) arranged within the draw saddle (10), the connecting unit (48, 56) being two-piece-formed by a plug part (48) and a socket part (56), one of these two parts, for example the plug part (48), being fixedly arranged in the draw saddle (10), and the other of these two parts, for example the socket part (56), being insertible into the draw saddle pin (10) for connection with the one of these two parts, the movable part of the connecting unit (48, 56) being received in a housing part (68) mounted at the coupling plate, and being insertible into the draw saddle pin (10) by a power unit (78, 96) for connection with the fixed part of the connecting unit (48, 56), and being guidable out of the draw saddle pin (10) during loosening of the fixed part of the connecting unit (48, 56), and being collapsible into the housing part (68), **characterized in that** the draw saddle pin (10) and therewith the fixedly received part of the connecting unit (48, 56) therein is rotatably positioned and can be arranged relative to the movable part of the connecting unit (48, 56) during the coupling process.

2. Saddle coupling according to claim 1, **characterized in that** at the draw saddle pin (10) a centering bolt (26) is positioned which during coupling process is slidably guided at guide elements (98) at the coupling plate.

3. Saddle coupling according to claim 1 to 2, **characterized in that** the housing part (68) comprises an automatically or, for example by spring force, actuatable closing cover.

4. Saddle coupling according to claim 3, **characterized in that** the cover (88) is moveable by the draw saddle pin by means of a control part (90) during the coupling process.

5. Saddle coupling according to one of claims 1 to 4, **characterized in that** the actuation unit (78, 96) comprises a, for example electrically or pneumatically, operable pinion drive (78, 96) for the lifting movement of the movable part of the connecting unit (48, 56).

6. Saddle coupling according to one of claims 1 to 5, **characterized in that** the drive unit (78, 96) comprises a for example electrically or pneumatically operable inclined or cam disc drive for the lifting movement of the movable part of the connecting unit (48, 56).

7. Saddle coupling according to claim 5, **characterized in that** the movable part of the connecting unit (48, 56) extends into the drive pinion (78) and is slidably guided therein via driving pins (84) engageing into grooves (82) at an inner wall (80) of the drive pinion (78).

8. Saddle coupling according to one of claims 1 to 7, **characterized in that** the movable part of the connecting unit (48, 56) is positioned, for example due to the housing part (68) receiving it floatingly, to secure tension-free plug connection at the coupling plate.

9. Saddle coupling according to one of claims 1 to 8, **characterized in that** in operation the movable part of the connecting unit (48, 56) is lockable via a securing pin (86) guided in the draw saddle pin (10).

10. Saddle coupling according to one of claims 1 to 9, **characterized in that** the fixed part of the connecting unit (48, 56) is axially and radially fixed in the draw saddle pin (10) by means of a distance sleeve (42), for example by arresting at a shoulder (100) circumfering in the draw saddle (10).

11. Saddle coupling according to claim 10, **characterized in that** the fixed part of the connecting unit (48, 56) is secured in its radial position by the distance sleeve (42) by means of interengaging webs and grooves.

12. Saddle coupling according to one of claims 1 to 4, **characterized in that** the supply leads are pneumatic leads (36) and that during operation the two parts of the connecting unit (48, 56) comprise channels aligned to each other to form pneumatic leads (36') to which at both sides pneumatic hoses (36) can be connected.

13. Saddle coupling according to one of claims 1 to 12, **characterized in that** the supply leads are electric cables (57) and that during operation the two parts of the connecting unit (48, 56) comprise interengageing contact pins (50) and contact sockets (58) to which the cables (52) are connected.

## Revendications

1. Sellette d'attelage pour atteler un tracteur routier et une remorque semi-portée, avec une plaque d'attelage, un pivot d'attelage (10) pouvant être mis en prise avec celle-ci, et avec des raccords pour connecter des conduites de distribution (36, 52) entre le tracteur routier et la remorque semi-portée, les conduites de distribution (36, 52) du tracteur routier et de la remorque semi-portée pouvant être introduites des deux côtés dans le pivot d'attelage (10) et reliées entre elles par une unité de raccordement (48, 56) placée dans le pivot d'attelage (10), l'unité de raccord (48, 56) étant formée en deux parties, une prise mâle (48) et une prise femelle (56), une de ces deux parties, par exemple la prise mâle (48), étant disposée de façon stationnaire dans le pivot d'attelage (10) et l'autre de ces deux parties, par exemple la prise femelle (56), pouvant être introduite dans le pivot d'attelage (10) pour la connexion avec l'autre de ces deux parties, la partie mobile de l'unité de raccord (48, 56) étant reçue dans une partie de boîtier (68) fixée à la plaque d'attelage et pouvant être introduite par une unité d'entraînement (78, 96) dans le pivot d'attelage (10) pour le raccordement avec la partie stationnaire de l'unité de raccord (48, 56) et pouvant être ressortie du pivot d'attelage (10) en libérant la partie stationnaire de l'unité de raccordement (48, 56) et étant escamotable dans la partie de boîtier (68), **caractérisée en ce que** le pivot d'attelage (10) et avec lui la partie de l'unité de raccordement (48, 56) reçue de façon stationnaire dans celle-ci sont tourillonnés et qu'ils peuvent être positionnés par rapport à la partie mobile de l'unité de raccordement (48, 56) lors du processus d'attelage.

2. Sellette d'attelage selon la revendication 1, **caractérisée en ce qu**'une cheville de centrage (26) est fixée au pivot d'attelage (10) et elle est guidée en glissant sur des éléments de guidage (98) sur la plaque d'attelage lors du processus d'attelage.

3. Sellette d'attelage selon la revendication 1 à 2, **caractérisée en ce que** la partie de boîtier (68) présente un couvercle (88) fermant, par exemple automatiquement par une force de ressort ou par entraînement.

4. Sellette d'attelage selon la revendication 3, **caractérisée en ce que** le couvercle (88) peut être déplacé lors du processus d'attelage du pivot d'attelage (10) par un élément de contrôle (90).

5. Sellette d'attelage selon l'une des revendications 1 à 4, **caractérisée en ce que** l'unité d'entraînement (78, 96) est munie d'une commande par engrenage / crémaillère (78, 96) par exemple pneumatique ou électrique pour le mouvement ascensionnel de la partie mobile de l'unité de raccordement (48, 56).

6. Sellette d'attelage selon l'une des revendications 1 à 5, **caractérisée en ce que** l'unité d'entraînement (78, 96) présente un entraînement à disque incliné ou excentré par exemple pneumatique ou électrique pour le mouvement ascensionnel de la partie mobile de l'unité de raccordement (48, 56).

7. Sellette d'attelage selon la revendication 5, **caractérisée en ce que** la partie mobile de l'unité de raccordement (48, 56) pénètre dans la roue motrice (78) et elle est guidée en glissant dans celle-ci par des chevilles d'entraînement s'engrainant dans des rainures (82) pratiquées dans une cloison (80) de la roue motrice (78).

8. Sellette d'attelage selon l'une des revendications 1 à 7, **caractérisée en ce que** la partie mobile de l'unité de raccordement (48, 56) est placée de façon flottante sur la plaque d'attelage, par exemple, en raison de la partie de boîtier (68) le recevant, pour garantir une connexion par fiches exempte de tension.

9. Sellette d'attelage selon l'une des revendications 1 à 8, **caractérisée en ce que** la partie mobile de l'unité de raccordement (48, 56) peut être verrouillée en position d'utilisation à l'aide d'une goupille de sécurité (86) introduite dans le pivot d'attelage (10).

10. Sellette d'attelage selon l'une des revendications 1 à 9, **caractérisée en ce que** la partie stationnaire de l'unité de raccordement (48, 56) est fixée de façon axiale et radiale dans le pivot d'attelage (10) au moyen d'une douille d'écartement (42), par exemple par butée sur un épaulement (100) circulaire placé dans le pivot d'attelage (10).

11. Sellette d'attelage selon la revendication 10, **caractérisée en ce que** la partie stationnaire de l'unité de raccordement (48, 56) est assurée dans sa position radiale par la douille d'écartement (42) au moyen d'entretoises et de rainures s'engrenant les uns dans les autres.

12. Sellette d'attelage selon l'une des revendications 1 à 4, **caractérisée en ce que** les conduites de distribution sont des conduites pneumatiques (36) et **en ce que** les deux parties de l'unité de raccordement (48, 56) présentent en position d'utilisation de canaux alignés entre eux pour former des conduites pneumatiques (36') auxquelles des conduites pneumatiques (36) peuvent être raccordées des deux côtés.

13. Sellette d'attelage selon l'une des revendications 1 à 12, **caractérisée en ce que** les conduites de distribution sont des câbles électriques (57) et les deux parties de l'unité de raccordement (48, 56) présentent des broches de contact (50) et des douilles de contact pénétrant les uns dans les autres en position d'utilisation et auxquels sont raccordés les câbles (52).
